# EUROPEAN PATENT APPLICATION

(11) **EP 4 836 243 A1**
(43) Date of publication of application: **04.11.2026**
(21) Application number: 24911447.1
(22) Date of filing: 27.12.2024
(51) Int. Cl.: H02K 1/17, F16F 6/00, H02K 1/18, H02K 1/20

(54) **CENTRAL ROD, STATOR, ELECTROMAGNETIC SHOCK ABSORBER AND VEHICLE**

(30) Priority: 29.12.2023 CN 202311872206
(71) Applicant: BYD Company Limited, Shenzhen, Guangdong 518118 (CN)
(72) Inventor: LIN, Jinhong, Shenzhen, Guangdong 518118 (CN); LIAO, Yinsheng, Shenzhen, Guangdong 518118 (CN); ZHAO, Gaoming, Shenzhen, Guangdong 518118 (CN); SUN, Xianmeng, Shenzhen, Guangdong 518118 (CN); ZHANG, Feng, Shenzhen, Guangdong 518118 (CN)
(74) Representative: Mathys & Squire
(86) International application number: PCT/CN2024/143111
(87) International publication number: WO 2025/140527

(57) **Abstract**

A central rod, a stator, an electromagnetic damper and a vehicle. The inside of the central rod is provided with a hollow cavity; the peripheral wall of the central rod is provided with central-rod cable outlet through-holes in communication with the hollow cavity; the peripheral wall of the central rod is further provided with a magnetic member mounting area for mounting a magnetic member; and the central rod is further provided with cooling chambers, the cooling chambers being adapted to accommodate a cooling medium.

## Description

### CROSS-REFERENCE TO RELATED APPLICATIONS

The present disclosure claims priority to Chinese Patent Application No. 202311872206.9 filed with the China National Intellectual Property Administration on December 29, 2023, titled "central rod, stator, linear motor, electromagnetic damper, suspension system, and vehicle", which is incorporated herein by reference in its entirety.

### FIELD

The present application relates to the technical field of anti-damping, and in particular to a central rod, a stator, an electromagnetic damper and a vehicle.

### BACKGROUND

In the related art, a linear motor includes a central rod, a fixing frame, and a magnetic member. The heat dissipation of the central rod relies solely on natural cooling, resulting in a poor cooling effect. In addition, the magnetic member is installed through the fixing frame, resulting in a complex overall structure of the electromagnetic damper and a large number of parts.

### SUMMARY

The present application aims to solve at least one of the technical problems existing in the prior art. To this end, the present application proposes a central rod capable of simplifying the overall structure and reducing the number of component parts of an electromagnetic damper.

This application also proposes a stator.

The present application also proposes an electromagnetic damper.

The present application also proposes a vehicle.

A central rod according to an embodiment of the present application, wherein the interior of the central rod defines a hollow cavity, a peripheral wall of the central rod is formed with a central rod cable outlet through-hole communicating with the hollow cavity, the peripheral wall of the central rod further has a magnetic member mounting area for mounting a magnetic member, and the central rod further has a cooling chamber, wherein the cooling chamber is adapted to accommodate a cooling medium.

According to the central rod of the embodiment of the present application, the central rod is applicable to an electromagnetic damper. By providing the magnetic member mounting area on the central rod, the magnetic member can be secured thereto, avoiding the need for a fixing frame, which is conducive to simplifying the structure of the electromagnetic damper and rendering the overall structure more compact. By providing the cooling chamber within the peripheral wall of the central rod, the central rod can be cooled, thereby cooling the magnetic member installed on the central rod, which is conducive to heat dissipation of the entire electromagnetic damper.

According to some embodiments of the present application, the cooling chamber extends along the circumferential direction of the central rod around the axis of the central rod.

According to some embodiments of the present application, the cooling chamber has a multi-layer structure, and the multi-layer structure is spaced apart along the radial direction of the central rod.

According to some embodiments of the present application, the cooling chamber comprises a first cooling chamber, the first cooling chamber is located on a radially inner side of the magnetic member mounting area, and a projection of the first cooling chamber in the radial direction of the central rod at least partially overlaps with a projection of the magnetic member mounting area in the radial direction of the central rod.

According to some embodiments of the present application, the first cooling chamber is a closed chamber.

According to some embodiments of the present application, the first cooling chamber comprises a plurality of chamber groups, and the plurality of chamber groups are spaced apart along the circumferential direction of the central rod.

According to some embodiments of the present application, the central rod cable outlet through-hole is provided in plurality, and in the circumferential direction of the central rod, each central rod cable outlet through-hole is formed between two adjacent chamber groups.

According to some embodiments of the present application, each chamber group comprises a plurality of sub-cooling chambers, and the plurality of sub-cooling chambers are spaced apart along the circumferential direction of the central rod.

According to some embodiments of the present application, the cooling chamber further comprises a second cooling chamber, the second cooling chamber extends along the circumferential direction of the central rod around the axis of the central rod, and the first cooling chamber is at least partially disposed surrounding the outer circumference of the second cooling chamber.

According to some embodiments of the present application, in the radial direction of the central rod, a minimum distance from the second cooling chamber to the hollow cavity is less than a minimum distance from the first cooling chamber to the outer circumferential surface of the central rod.

According to some embodiments of the present application, the central rod comprises a first rod segment and a second rod segment, the magnetic member mounting area is located on the second rod segment, the first cooling chamber extends from the first rod segment into the second rod segment, the second cooling chamber is disposed within the first rod segment, and an end of the first rod segment remote from the second rod segment is provided with a medium inlet and a medium outlet, both of which communicate with the second cooling chamber.

According to some embodiments of the present application, the hollow cavity comprises a cable routing cavity located within the first rod segment and a guide cavity located within the second rod segment, and the diameter of the guide cavity is greater than the diameter of the cable routing cavity.

According to some embodiments of the present application, the central rod further comprises a rod ring structure, an outer diameter of the rod ring structure is greater than an outer diameter of the second rod segment, and the rod ring structure is configured to axially stop the magnetic member in the axial direction of the central rod.

According to some embodiments of the present application, the central rod cable outlet through-hole is formed on a side of the rod ring structure facing away from the second rod segment.

According to some embodiments of the present application, an end of the second rod segment remote from the first rod segment is provided with a second threaded segment, the second threaded segment is configured to threadedly engage with a limit nut, and the magnetic member mounting area is located between the rod ring structure and the second threaded segment.

According to some embodiments of the present application, an end of the first rod segment remote from the second rod segment is provided with a first threaded segment, and the first threaded segment is configured to threadedly engage with a top mount; and the second rod segment is provided with a rotation limiting structure, the rotation limiting structure being configured to limit rotation of the magnetic member relative to the central rod.

A stator according to an embodiment of the present application comprises: a cable; the magnetic member; and the central rod according to any of the above. The cable passes through the central rod cable outlet through-hole, and a portion of the cable is located within the hollow cavity while another portion of the cable is located outside the central rod. The magnetic member is fitted over the magnetic member mounting area, the magnetic member comprising a winding lead, and the winding lead being adapted to connect to the cable.

According to the stator of the embodiment of the present application, by providing the central rod described above, the central rod is applicable to the electromagnetic damper. By providing the magnetic member mounting area on the central rod, the magnetic member can be secured thereto, avoiding the need for a fixing frame, which is conducive to simplifying the structure of the electromagnetic damper and rendering the overall structure more compact. By providing the cooling chamber within the peripheral wall of the central rod, the central rod can be cooled, thereby cooling the magnetic member installed on the central rod, which is conducive to the heat dissipation of the entire electromagnetic damper.

According to some embodiments of the present application, the stator further comprises a limit nut, the central rod has a rod ring structure, the limit nut is threadedly engaged with a second threaded segment on the central rod, and in the axial direction of the central rod, one end of the magnetic member abuts against the rod ring structure and the other end of the magnetic member abuts against the limit nut.

An electromagnetic damper according to an embodiment of the present application comprises: a mover; and the stator according to the above. The mover has a mover cavity, the stator is disposed within the mover cavity, and the mover is capable of moving axially relative to the stator.

According to the electromagnetic damper of the embodiment of the present application, by providing the central rod described above, the central rod is applicable to the electromagnetic damper. By providing the magnetic member mounting area on the central rod, the magnetic member can be secured thereto, avoiding the need for a fixing frame, which is conducive to simplifying the structure of the electromagnetic damper and rendering the overall structure more compact. By providing the cooling chamber within the peripheral wall of the central rod, the central rod can be cooled, thereby cooling the magnetic member installed on the central rod, which is conducive to the heat dissipation of the entire electromagnetic damper.

According to some embodiments of the present application, the mover comprises: a housing; a mover magnet mounted on an inner wall of the housing, wherein an inner side of the mover magnet forms the mover cavity, and the mover magnet is fitted over an outer circumference of the magnetic member; and a guide post connected to the housing and further configured to connect to a lower control arm of a vehicle, wherein the hollow cavity comprises a guide cavity, and at least a portion of the guide post is adapted to extend into the guide cavity and is capable of moving in the axial direction of the central rod.

According to some embodiments of the present application, the electromagnetic damper further comprises a first plain bearing and a second plain bearing, the housing has a housing bore, the central rod passes through the housing bore to partially protrude outside the housing, the first plain bearing is disposed between the housing bore and the outer circumferential surface of the central rod, and the second plain bearing is disposed between the outer circumferential surface of the guide post and a cavity wall of the hollow cavity.

According to some embodiments of the present application, the mover further comprises a buffer pad, the buffer pad being fitted over the guide-post and located outside an end of the central rod.

According to some embodiments of the present application, the electromagnetic damper further comprises a top mount, a spring is provided between the top mount and the housing, and the top mount comprises: an upper support member adapted to connect to a vehicle body, wherein the central rod is adapted to pass through the upper support member, the central rod has an end shoulder, and the upper support member abuts against the end shoulder; and a fastening nut located on a side of the upper support member facing away from the mover, wherein the fastening nut is adapted to threadedly engage with the first threaded segment on the central rod, and the upper support member is sandwiched between the fastening nut and the end shoulder.

A vehicle according to an embodiment of the present application comprises a suspension system, wherein the suspension system comprises the electromagnetic damper according to the above.

According to the vehicle of the embodiment of the present application, by providing the electromagnetic damper described above, the central rod is suitable for the electromagnetic damper. By providing the magnetic member mounting area on the central rod, the magnetic member can be secured thereto, avoiding the need for a fixing frame, which is conducive to simplifying the structure of the electromagnetic damper and rendering the overall structure more compact. By providing the cooling chamber within the peripheral wall of the central rod, the central rod can be cooled, thereby cooling the magnetic member installed on the central rod, which is conducive to heat dissipation of the entire electromagnetic damper.

Additional aspects and advantages of the present application will be given in part in the description below, and in part will become apparent from the description below, or will be learned through practice of the present application.

### BRIEF DESCRIPTION OF THE DRAWINGS

The above and/or additional aspects and advantages of the present application will become apparent and easily understood from the description of the embodiments in conjunction with the following drawings, in which:
FIG. 1 is a schematic view of an electromagnetic damper according to an embodiment of the present application;
FIG. 2 schematic view of a central rod according to an embodiment of the present application;
FIG. 3 is a partial cross-sectional view of a central rod from one viewing angle according to an embodiment of the present application;
FIG. 4 is a partial cross-sectional view of the central rod from another viewing angle according to an embodiment of the present application;
FIG. 5 is a schematic diagram of the assembly of the central rod and the magnetic member according to an embodiment of the present application;
FIG. 6 is a schematic diagram of the assembly of the central rod and the housing according to an embodiment of the present application;
FIG. 7 is an assembly schematic view of a cable and a cable outlet device according to an embodiment of the present application;
FIG. 8 is a schematic diagram of a suspension system according to an embodiment of the present application;
FIG. 9 is a schematic diagram of a vehicle according to an embodiment of the present application.

### Reference numerals:

vehicle 10000, suspension system 2000, electromagnetic damper 1000, stator 100, mover 600, top mount 700, sensor;
central rod 1, first rod segment 11, first outlet half hole 111, anti-rotation groove 112, end shoulder 113, second rod segment 12, magnetic member mounting area 122, cable routing cavity 13, peripheral wall 14, sensor mounting area 141, cooling chamber 142, sensor positioning plane 1411, sensor fixing structure 1412, second cooling chamber 1423, first cooling chamber 1424, sub-cooling chamber 14241, medium inlet 14211, medium outlet 14212, rod ring structure 15, second outlet half hole 152, central rod cable outlet through-hole 16, first threaded segment 171, second threaded segment 172, limit nut 18, guide cavity 19;
cable 2, plug connector 21, wiring cable portion 22, phase cable portion 23, magnetic member 3, winding 31, iron core 32, reinforcing rib 321, wire harness fixing slot 3211, wire inlet passage 3212, wire outlet slot 322, cable outlet device 4, cable channel 41, limit pad 5;
housing 601, positioning hole 6011, housing bore 6012, mover magnet 602, clevis 603, clevis body 6031, guide-post 6032, first plain bearing 6041, second plain bearing 6042, buffer pad 605, dust cover 606, spring 607;
upper support member 701, fastening nut 702, rotation limiting structure 8, rotation limiting groove 82, first rotation limiting groove 821, positioning groove 822, rotation limiting pin 823.

### DETAILED DESCRIPTION

The following describes in detail embodiments of the present application. Examples of the embodiments are shown in the accompanying drawings, wherein the same or similar reference numerals throughout represent the same or similar elements or elements having the same or similar functions. The embodiments described below with reference to the accompanying drawings are exemplary and are only used to explain the present application and are not to be construed as limiting the present application.

In the description of the present application, it will be understood that the terms "center", "longitudinal", "lateral", "length", "width", "thickness", "up", "down", "front", "back", "left", "right", "vertical", "horizontal", "top", "bottom", "inside", "outside", "clockwise", "counterclockwise", "axial", "radial", "circumferential", etc., indicating the orientation or position relationship, are based on the orientation or position relationship shown in the accompanying drawings, and are only for the convenience of describing the present application and simplifying the description, rather than indicating or implying that the device or element referred to must have a specific orientation, be constructed and operated in a specific orientation, and therefore will not be understood as a limitation on the present application. In addition, features defined as "first" and "second" may explicitly or implicitly include one or more of such features. In the description of the present application, unless otherwise specified, "multiple" means two or more.

In the description of this application, it will be noted that, unless otherwise expressly specified or limited, the terms "mounted", "connected," and "connected" will be understood in a broad sense. For example, they can refer to fixed connections, detachable connections, or integral connections; mechanical connections or electrical connections; direct connections or indirect connections through an intermediate medium; and internal connections between two components. Those skilled in the art will understand the specific meanings of the above terms in this application based on the specific circumstances.

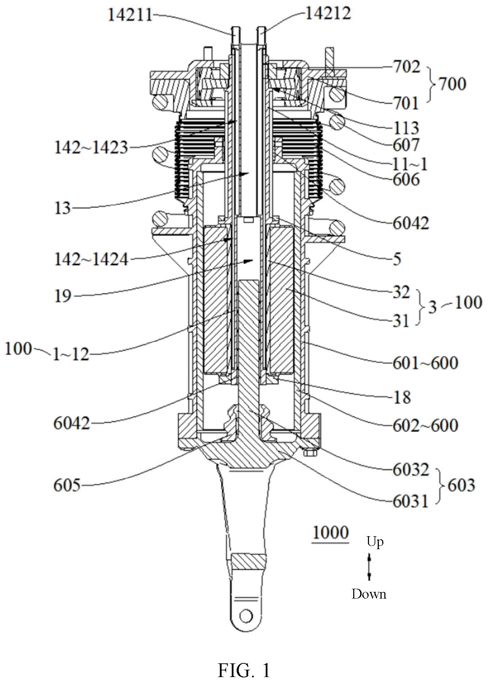

The following describes a central rod 1, a stator 100, linear motor, an electromagnetic damper 1000, a suspension system 2000, and a vehicle 10000 according to an embodiment of the present application with reference to FIG. 1 to FIG. 9.

As shown in FIGS. 1, 3, and 4, the interior of the central rod (1) according to an embodiment of the present application defines a hollow cavity, and the peripheral wall (14) of the central rod (1) is formed with a central rod cable outlet through-hole (16) communicating with the hollow cavity. The peripheral wall (14) of the central rod (1) further has a magnetic member mounting area (122) on which the magnetic member (3) can be installed, and the central rod (1) further has a cooling chamber (142) capable of accommodating a cooling medium.

The hollow cavity can accommodate an electrical connector of the magnetic member (3), and the electrical connector can be routed outside the peripheral wall (14) of the central rod (1) via the central rod cable outlet through-hole (16); conversely, the electrical connector from outside the central rod (1) can also be routed into the peripheral wall (14) via the central rod cable outlet through-hole (16), thereby reducing the risk of the electrical connector being compressed or damaged. For example, the electrical connector may be a cable (2).

The central rod (1) is suitable for the electromagnetic damper (1000). By providing the cooling chamber (142) within the central rod (1), the central rod (1) can be cooled, thereby cooling the magnetic member (3) installed on the central rod (1), which is conducive to the heat dissipation of the entire electromagnetic damper (1000).

It will be noted that the central rod (1) has a peripheral wall (14), and the peripheral wall (14) comprises an inner surface and an outer surface, that is, a spacing exists between the inner surface and the outer surface of the peripheral wall (14), and the distance between the inner surface and the outer surface of the peripheral wall (14) is the thickness of the peripheral wall (14). Both the hollow cavity and the cooling chamber (142) are located within the interior of the central rod (1); specifically, the hollow cavity is located inside the inner surface, and the cooling chamber (142) is located between the inner surface and the outer surface. In other words, the peripheral wall (14) is an annular solid structure having a certain thickness, and the inner surface of the peripheral wall (14) defines the hollow cavity.

The central rod (1) may be a tapered rod with a cross-sectional area that decreases along the axial direction of the central rod (1); alternatively, the central rod (1) may be a flared rod with a cross-sectional area that progressively increases along the axial direction of the central rod (1); or the central rod (1) may be a stepped rod with an abruptly varying cross-sectional area; no limitation is placed on the specific type of central rod (1) herein.

By way of example, the central rod cable outlet through-hole (16) extends in the radial direction of the central rod (1), and the cooling chamber (142) is disposed within the peripheral wall (14).

In contrast to the related art, the present application eliminates the need for a fixing frame, thereby simplifying the structure of the electromagnetic damper (1000).

According to the central rod (1) of the embodiment of the present application, the central rod (1) is suitable for the electromagnetic damper (1000). By providing the magnetic member mounting area (122) on the central rod (1), the magnetic member (3) can be secured thereto, avoiding the need for a fixing frame, which is conducive to simplifying the structure of the electromagnetic damper (1000) and rendering the overall structure more compact. By providing the cooling chamber (142) within the peripheral wall (14) of the central rod (1), the central rod (1) can be cooled, thereby cooling the magnetic member (3) installed on the central rod (1), which is conducive to heat dissipation of the entire electromagnetic damper (1000).

By way of example, the central rod (1) is suitable for the stator (100) of the electromagnetic damper (1000).

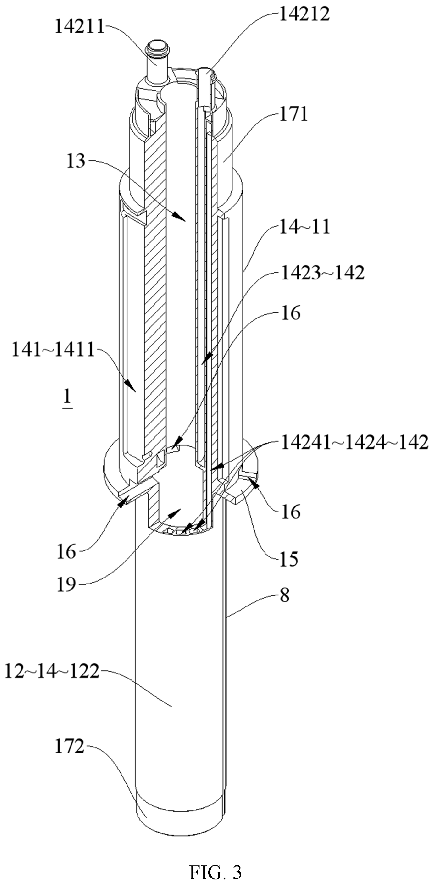

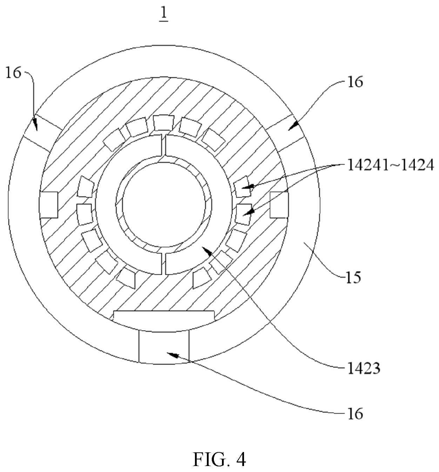

As shown in FIGS. 3 and 4, in some embodiments, the cooling chamber (142) extends along the circumferential direction of the central rod (1) around the axis of the central rod (1), so that the cooling chamber (142) can increase its own cooling range, which is conducive to improving the heat dissipation effect.

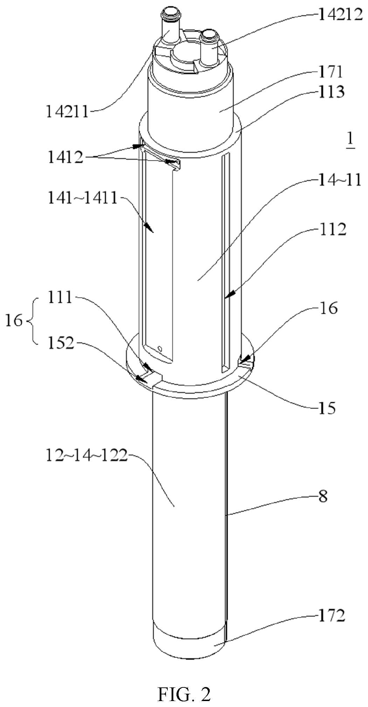

As shown in FIGS. 2 to 4, by way of example, the central rod (1) is a rod with a circular annular cross-section having an axis, and the cooling chamber (142) is configured to be disposed surrounding the axis. The cooling chamber (142) extends along the circumferential direction of the central rod (1), which can increase the cooling area and improve the heat dissipation effect.

As shown in FIGS. 3 and 4, in some embodiments, the cooling chamber (142) has a multi-layer structure, and the cooling chambers (142) are spaced apart along the radial direction of the central rod (1). By providing the cooling chamber (142) with a multi-layer structure inside the central rod (1), the heat dissipation effect and cooling efficiency can be improved.

As shown in FIGS. 1, 3, and 4, in some embodiments, the cooling chamber (142) comprises a first cooling chamber (1424), the first cooling chamber (1424) is located on a radially inner side of the magnetic member mounting area (122), and a projection of the first cooling chamber (1424) in the radial direction of the central rod (1) at least partially overlaps with a projection of the magnetic member mounting area (122) in the radial direction of the central rod (1). The magnetic member mounting area (122) can accommodate the magnetic member (3), the magnetic member (3) can be fitted over the outer surface of the peripheral wall (14) of the central rod (1), a projection of the first cooling chamber (1424) on the axis of the central rod (1) may partially overlap with that of the magnetic member (3), and the first cooling chamber (1424) can be positioned opposite to the magnetic member (3), thereby providing a short heat transfer path and effectively improving the heat dissipation efficiency.

As shown in FIGS. 1, 3, and 4, in some embodiments, the first cooling chamber (1424) is a closed chamber that is not connected to the outside. The cooling medium within the first cooling chamber (1424) can undergo liquid-to-gas phase transformation to achieve cooling and heat dissipation. For example, the first cooling chamber (1424) can absorb heat from the magnetic member (3) on the central rod (1), and the cooling medium absorbs the heat and changes from liquid to gas, thereby rapidly lowering the temperature of the central rod (1) and the magnetic member (3).

As shown in FIG. 4, in some embodiments, the first cooling chamber (1424) comprises a plurality of chamber groups, and the plurality of chamber groups are spaced apart along the circumferential direction of the central rod (1). By providing a plurality of chamber groups arranged along the circumferential direction of the central rod (1), the cooling range is increased, the heat dissipation effect is improved, and the heat dissipation of the central rod (1) is more uniform.

As shown in FIGS. 3 and 4, in some embodiments, the central rod cable outlet through-hole (16) is provided in plurality, and in the circumferential direction of the central rod (1), each central rod cable outlet through-hole (16) is formed between two adjacent chamber groups, thereby preventing the cooling medium from escaping through the central rod cable outlet through-holes (16) and improving the safety of the electromagnetic damper (1000).

As shown in FIGS. 3 and 4, in some embodiments, each chamber group comprises a plurality of sub-cooling chambers (14241), and the plurality of sub-cooling chambers (14241) are spaced apart along the circumferential direction of the central rod (1). Each chamber group includes N sub-cooling chambers (14241), where N is a positive integer. By way of example, N may be 1, 2, 3, 4, or the like. By providing a plurality of sub-cooling chambers (14241), the structural reliability can be improved.

As shown in FIGS. 1, 3, and 4, in some embodiments, the cooling chamber (142) further comprises a second cooling chamber (1423), the second cooling chamber (1423) extends along the circumferential direction of the central rod (1) around the axis of the central rod (1), and the first cooling chamber (1424) is at least partially disposed surrounding the outer circumference of the second cooling chamber (1423), that is, in the radial direction of the central rod (1), the first cooling chamber (1424) and the second cooling chamber (1423) are located at different radial positions of the central rod (1); and a projection of the first cooling chamber (1424) on the axis of the central rod (1) partially overlaps with a projection of the second cooling chamber (1423) on the axis of the central rod (1). By providing the first cooling chamber (1424) and the second cooling chamber (1423), different degrees of cooling can be achieved at different locations of the central rod (1), thereby improving the heat dissipation efficiency and enhancing the heat dissipation capacity and cooling effect of the central rod (1).

As shown in FIGS. 1, 3, and 4, in some embodiments, in the radial direction of the central rod (1), the minimum distance from the second cooling chamber (1423) to the hollow cavity is less than the minimum distance from the first cooling chamber (1424) to the outer circumferential surface of the central rod (1). The first cooling chamber (1424) and the second cooling chamber (1423) are disposed closer to the interior of the central rod (1) in the radial direction, which can reduce the impact on the strength of the peripheral wall (14) of the central rod (1), and allow the central rod (1) to have sufficient strength to support the magnetic member (3).

As shown in FIGS. 1 to 4, in some embodiments, the central rod (1) comprises a first rod segment (11) and a second rod segment (12), the magnetic member mounting area (122) is located on the second rod segment (12), the first cooling chamber (1424) extends from the first rod segment (11) into the second rod segment (12), and the second cooling chamber (1423) is disposed within the first rod segment (11). The first rod segment (11) of the central rod (1) is provided with both the first cooling chamber (1424) and the second cooling chamber (1423) at different radial positions of the central rod (1), which can improve the cooling effect; the second rod segment (12) of the central rod (1) is provided with the first cooling chamber (1424) capable of cooling the magnetic member (3). The first cooling chamber (1424) and the second cooling chamber (1423) cooperate with high efficiency, making full use of the design space of the central rod (1) by making the peripheral wall (14) hollow. Based on the different functions of the first rod segment (11) and the second rod segment (12) of the central rod (1), and by utilizing spatial separation, two different cooling design schemes - the first cooling chamber (1424) and the second cooling chamber (1423) - are designed to address the heat dissipation problem during operation of the electromagnetic damper (1000), without the addition of extra component parts, resulting in a compact overall cooling structure.

As shown in FIGS. 1 to 3, in some embodiments, an end of the first rod segment (11) remote from the second rod segment (12) is provided with a medium inlet (14211) and a medium outlet (14212), both of which communicate with the second cooling chamber (1423). The medium inlet (14211) and the medium outlet (14212) allow the cooling medium to pass through, enabling the cooling medium in the second cooling chamber (1423) to circulate and exchange heat with the outside, for example with air, thereby improving the heat dissipation effect.

As shown in FIGS. 1 and 3, in some embodiments, the hollow cavity comprises a cable routing cavity (13) located within the first rod segment (11) and a guide cavity (19) located within the second rod segment (12), and the diameter of the guide cavity (19) is greater than the diameter of the cable routing cavity (13). By dimensioning the hollow cavity differently according to its different functions and purposes, the space utilization of the hollow cavity is improved.

As shown in FIGS. 1 and 3, the outer surface of the peripheral wall (14) of the central rod (1) further has a sensor mounting area (141) that can be used to install a sensor. The peripheral wall (14) is an annular solid structure having a certain thickness, and the inner surface of the peripheral wall (14) defines the hollow cavity. This means that the sensor can be mounted on the central rod (1), and since the central rod (1) is in a fixed position when applied to the electromagnetic damper (1000), the sensor will not move. Optionally, the sensor may be a displacement sensor, a speed sensor, an acceleration sensor, a temperature sensor, or the like.

By way of example, the central rod (1) comprises the first rod segment (11) and the second rod segment (12), the sensor mounting area (141) is located on the first rod segment (11), the magnetic member mounting area (122) is located on the second rod segment (12), the hollow cavity comprises the cable routing cavity (13) within the first rod segment (11) and the guide cavity (19) within the second rod segment (12), and the central rod cable outlet through-hole (16) communicates with the cable routing cavity (13). The guide cavity (19) may communicate with the cable routing cavity (13), and the guide cavity (19) and the cable routing cavity (13) together form a single hollow cavity; or in other embodiments, the guide cavity (19) may be separated from the cable routing cavity (13) by a partition wall, and the guide cavity (19) and the cable routing cavity (13) each form a part of the hollow cavity.

As shown in FIGS. 1 to 4, in some embodiments, the central rod (1) further comprises a rod ring structure (15), the outer diameter of the rod ring structure (15) is greater than the outer diameter of the second rod segment (12), and the rod ring structure (15) can axially stop the magnetic member (3). The rod ring structure (15) is disposed between the first rod segment (11) and the second rod segment (12), and in the axial direction of the central rod (1), the first rod segment (11), the rod ring structure (15), and the second rod segment (12) are arranged in sequence. By way of example, the magnetic member (3) is installed on the magnetic member mounting area (122) of the second rod segment (12), the rod ring structure (15) is located on the upper side of the magnetic member (3) (as shown in FIG. 1), and the rod ring structure (15) can restrict the axial movement of the magnetic member (3), preventing the magnetic member (3) from moving toward the first rod segment (11).

As shown in FIGS. 2 and 3, in some embodiments, the central rod cable outlet through-hole (16) is located on a side of the rod ring structure (15) facing away from the second rod segment (12). The central rod cable outlet through-hole (16) may be formed solely on the first rod segment (11), or solely on the rod ring structure (15), or a portion of each central rod cable outlet through-hole (16) may be formed on the first rod segment (11) with the remaining portion formed on the rod ring structure (15). For example, in the axial direction of the central rod (1), the rod ring structure (15) has a certain thickness, and each central rod cable outlet through-hole (16) is partially formed on the rod ring structure (15), not fully extending through the rod ring structure (15) in the thickness direction. In the radial direction of the central rod (1), the outer diameter of the rod ring structure (15) is greater than the outer diameter of the second rod segment (12), and the central rod cable outlet through-hole (16) protrudes radially beyond the second rod segment (12), so that the rod ring structure (15) can guide and protect the electrical connector, for example, protecting wire harnesses such as signal output lines.

As shown in FIGS. 2 and 3, in some embodiments, an end of the second rod segment (12) remote from the first rod segment (11) is provided with a second threaded segment (172) configured to threadedly engage with a limit nut (18), and the magnetic member mounting area (122) is located between the rod ring structure (15) and the second threaded segment (172). The limit nut (18) can be fitted over the second threaded segment (172) of the central rod (1) and installed at the lower end of the magnetic member (3), while the rod ring structure (15) is positioned at the upper end of the magnetic member (3). The limit nut (18) and the rod ring structure (15) cooperate to restrict the axial movement of the magnetic member (3).

As shown in FIGS. 1 to 3, in some embodiments, an end of the first rod segment (11) remote from the second rod segment (12) is provided with a first threaded segment (171) configured to threadedly engage with a top mount (700). By way of example, the stator (100) and the top mount (700) are assembled together by means of the central rod (1) and the fastening nut (702) in the stator (100). During assembly, a torque wrench is required to tighten the fastening nut (702). To prevent the stator (100) from rotating together with the fastening nut (702) around the central axis of the central rod (1), which would make tightening impossible, anti-rotation grooves (112) are provided on both sides of the first rod segment (11) on the central rod (1), and the housing (601) has positioning holes (6011) corresponding to the anti-rotation grooves (112). During assembly, inserting a long pin through the pin holes provides anti-rotation, and the fastening nut (702) can then be tightened to complete the assembly.

In some embodiments, the second rod segment (12) is provided with a rotation limiting structure (8) configured to restrict rotation of the magnetic member (3) relative to the central rod (1). The magnetic member (3) comprises windings (31) and iron cores (32), and the magnetic member (3) is composed of a plurality of windings (31) and iron cores (32) stacked alternately on the central rod (1) in a layer of winding (31) and a layer of iron core (32) arrangement, which facilitates the manufacture of the iron cores (32) and the winding of the windings (31). The iron core (32) is slidably connected to the central rod (1), and a rotation limiting structure (8) is provided between the iron core (32) and the central rod (1) to restrict the rotation of the iron core (32) about the axis of the central rod (1). By way of example, the rotation limiting structure (8) comprises a rotation limiting pin (823) and a rotation limiting groove (82), wherein the rotation limiting groove (82) comprises a first rotation limiting groove (821) provided on the iron core (32) and a positioning groove (822) on the central rod (1). The first rotation limiting groove (821) on the iron core (32) is a semicircular recess that can cooperate with the semicircular positioning groove (822) on the outer side of the lower portion of the central rod (1). During assembly, the rotation limiting pin (823) is inserted between the two, thereby restricting the iron core (32) from rotating about the central axis of the central rod (1). This design ensures that the winding (31) exits at the designed position, and thus improves the stability of the connection between the iron core (32) and the central rod (1). This design also ensures that the entire magnetic member (3) is fixed to the central rod (1) in the designed state, which can improve the rigidity of the stator (100) and the operational stability of the electromagnetic damper (1000). By way of example, the assembly process of the central rod (1) and the iron core (32) may first involve installing the rotation limiting pin (823) in the positioning groove (822) of the central rod (1), the rotation limiting pin (823) protruding radially beyond the positioning groove (822), and a viscous substance may be used to preliminarily fix the rotation limiting pin (823) to the central rod (1). The wound iron cores (32) of each layer are then press-fitted one by one onto the exterior of the central rod (1), at which point the protruding portion of the rotation limiting pin (823) provides excellent guidance for the assembly of the iron cores (32), ensuring the positional accuracy of each layer of windings (31). All layers of iron cores (32) are ultimately press-fitted, and an interference fit is provided between the central rod (1) and each layer of iron core (32) to ensure the tightness of the fit. The assembled rotation limiting pin (823) remains between the central rod (1) and the iron core (32). In operation, since the rotation limiting pin (823) restricts the circumferential rotation of the iron core (32), safety hazards caused by circumferential rotation of the windings (31) are avoided.

As shown in FIGS. 2, 3, and 7, in some embodiments, the sensor mounting area 141 includes at least a sensor positioning plane 1411, on which a sensor fixing structure 1412 is disposed. The sensor positioning plane 1411 allows the sensor to be positioned more stably, improving the stability and reliability of the sensor's detection operation. Furthermore, the sensor fixing structure 1412 secures the sensor to the sensor positioning plane 1411, preventing it from falling off and improving the stability and reliability of the connection. When the sensor includes a bracket and a magnet, the bracket can be secured to the sensor positioning plane 1411 via the sensor fixing structure 1412, and the magnet can be adhered to the bracket.

Optionally, the sensor fixing structure 1412 may be a screw hole, a rivet hole, etc.

A sensor positioning structure may also be provided on the sensor positioning plane 1411 to position the sensor at an accurate position before fixing the sensor. Optionally, the sensor positioning structure may be a positioning hole, a positioning pin, or the like.

As shown in FIGS. 4 to 7, for example, the central rod 1 has a circular cross-section, the outermost side of the peripheral wall 14 is a cylindrical surface, and the sensor positioning plane 1411 is a straight wall surface formed by the outer side of the peripheral wall 14 being recessed toward the inner side of the peripheral wall 14. Optionally, the sensor positioning plane 1411 is parallel to the axis of the central rod 1.

As shown in FIGS. 1 to 5, in some embodiments, the central rod 1 includes a first rod segment 11 and a second rod segment 12. The sensor mounting area 141 is located on the first rod segment 11, and the second rod segment 12 is provided with a magnetic member mounting area 122. The sensor is mounted on the first rod segment 11 of the central rod 1, and the magnetic member 3 is mounted on the second rod segment 12 of the central rod 1, thereby reducing interference between the sensor and the magnetic member 3.

As shown in FIG4, in some embodiments, in the axial direction of the central rod 1, the central rod cable outlet through-hole 16 is located between the sensor mounting area 141 and the magnetic member mounting area 122. In combination with the above embodiments, the first rod segment 11 and the second rod segment 12 are sequentially arranged along the axial direction of the central rod 1, the sensor mounting area 141 is arranged on the first rod segment 11, the magnetic member mounting area 122 is arranged on the second rod segment 12, and the sensor is mounted on the sensor mounting area 141, the magnetic member 3 is mounted on the magnetic member mounting area 122 of the central rod 1, and the central rod cable outlet through-hole 16 is arranged between the sensor mounting area 141 and the magnetic member mounting area 122. In other words, the sensor and the magnetic member 3 are separated in the axial direction of the central rod 1, and the central rod cable outlet through-hole 16 is arranged between the sensor and the magnetic member 3. As a result, the electrical connection line of the magnetic member 3 can be close to the central rod cable outlet through-hole 16, thereby reducing the length of the electrical connection line and saving costs. When the sensor has a signal transmission line, the signal transmission line of the sensor can be close to the central rod cable outlet through-hole 16, thereby reducing the length of the signal transmission line and saving costs.

Optionally, a single-layer cooling structure can be provided between the outer side surface and the inner side surface of the peripheral wall 14, that is, in the radial direction of the central rod 1, the interior of the central rod 1 can include multiple cooling chambers 142, and the multiple cooling chambers 142 are dispersedly arranged around the axis of the central rod 1. For example, the multiple cooling chambers 142 can all be located on the same radial direction of the central rod 1.

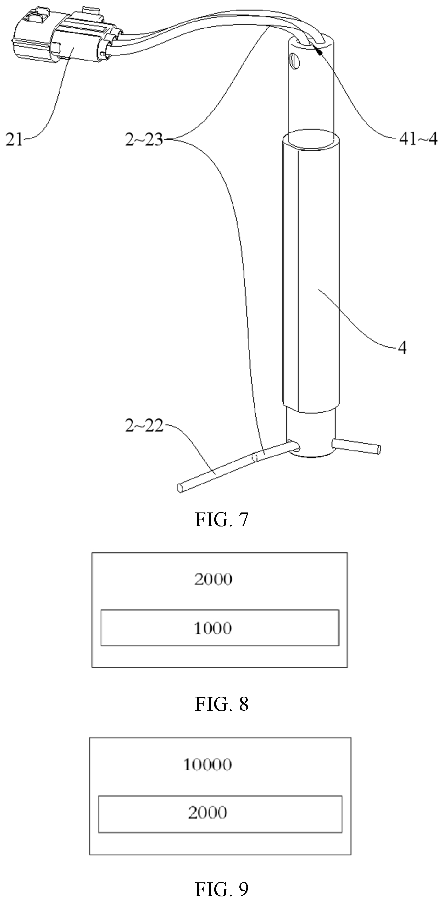

As shown in FIGS. 1 and 7, by way of example, the stator 100 comprises a cable 2, a central rod 1, and a magnetic member 3. The cable 2 is passed through the central rod cable outlet through-hole 16, a portion of the cable 2 is located in the hollow cavity of the central rod 1, and another portion of the cable 2 is located outside the central rod 1. The magnetic member 3 can be sleeved on the magnetic member mounting area 122 of the central rod 1, and a portion of the cable 2 is arranged on the outer periphery of the magnetic member 3. The magnetic member 3 includes a winding lead, which can be led out to the outer periphery of the magnetic member 3, and the winding lead can be connected to the cable 2. That is, the other portion of the cable 2 can be connected to the winding lead at the outer periphery of the magnetic member 3. Since the winding lead is connected to the cable 2 on the outside of the magnetic member 3, the tool operation space is not restricted, and the assembly space is expanded, which is conducive to reducing the difficulty of assembly and improving assembly efficiency. It is also conducive to mass production and easy to intuitively find problems during subsequent maintenance, thereby reducing maintenance costs.

In the related art, the connection position between the winding lead of the magnetic member and the cable is located on the inside of the magnetic member. The inner lead wire is not only difficult to thread back and forth for assembly, wastes materials, and takes up design space, but also inconvenient to detect because the connection position is located on the inside of the magnetic member. In the present application, the winding lead of the magnetic member 3 can be led out to the periphery of the magnetic member 3, and the cable 2 is connected to the periphery of the magnetic member 3, which has a greater assembly space, reduces the difficulty of assembly, and can also improve assembly efficiency, which is conducive to mass production and easy to intuitively find problems during subsequent maintenance.

In combination with the above embodiments, the central rod 1 includes a first rod segment 11 and a second rod segment 12. In the axial direction of the central rod 1, the first rod segment 11 is located on one side of the central rod cable outlet through-hole 16 (the upper side as shown in FIG. 1), and the second rod segment 12 is located on the other side of the central rod cable outlet through-hole 16 (the lower side as shown in FIG. 1). The magnetic member 3 can be sleeved outside the second rod segment 12. Specifically, the central rod cable outlet through-hole 16 and the magnetic member 3 are located at different positions on the central rod 1, so as to avoid interference between the cable 2 and the magnetic member 3 when passing through the central rod cable outlet through-hole 16, thereby reducing the difficulty of inserting the cable 2 into the central rod 1 and improving assembly efficiency. In addition, the cable 2 can extend downward after passing through the central rod cable outlet through-hole 16 to surround the outer periphery of the magnetic member 3, thereby avoiding wire wastage caused by excessive winding when the cable 2 passes through the inner side of the magnetic member 3 and then winds toward the outer side of the magnetic member 3. Of course, the cable 2 can also be passed from the periphery of the magnetic member 3 through the central rod cable outlet through-hole 16 into the hollow cavity. In this application, there is no limitation on the threading direction at the central rod cable outlet through-hole 16. The threading direction described is only used to illustrate the structural features.

Of course, in some optional embodiments, the winding lead may also exit from the inner side or the end of the magnetic member (3) to connect to the cable (2).

According to the stator (100) of the embodiment of the present application, by providing the central rod (1) described above, the central rod (1) is suitable for the electromagnetic damper (1000). By providing the magnetic member mounting area (122) on the central rod (1), the magnetic member (3) can be secured thereto, avoiding the need for a fixing frame, which is conducive to simplifying the structure of the electromagnetic damper (1000), rendering the overall structure more compact. By providing the cooling chamber (142) within the peripheral wall (14) of the central rod (1), the central rod (1) can be cooled, thereby cooling the magnetic member (3) installed on the central rod (1), which is conducive to the heat dissipation of the entire electromagnetic damper (1000).

As shown in FIGS. 1 and 2, in some embodiments, the stator (100) further comprises a limit nut (18), the central rod (1) has a rod ring structure (15), the limit nut (18) is threadedly engaged with the second threaded segment (172) on the central rod (1), and in the axial direction of the central rod (1), one end of the magnetic member (3) abuts against the rod ring structure (15) and the other end of the magnetic member (3) abuts against the limit nut (18), thereby preventing the magnetic member (3) from sliding in the axial direction of the central rod (1) and improving the reliability of the stator (100).

By way of example, the stator (100) further comprises a cable outlet device (4), the cable outlet device (4) being disposed within the cable routing cavity (13) and capable of securing the cable (2). By providing the cable outlet device (4), the movement of the cable (2) can be restrained, the cable (2) is prevented from swaying within the cable routing cavity (13), and the cable outlet device (4) can also protect the cable (2), reducing the risk of the cable (2) being compressed or cut. The cable (2) comprises a phase cable portion (23) and a wiring cable portion (22), the phase cable portion (23) is located within the cable routing cavity (13) and a portion of the phase cable portion (23) can pass out through the central rod cable outlet through-hole (16), and the wiring cable portion (22) is disposed on the outer circumference of the magnetic member (3). The wiring cable portion (22) is connected to the phase cable portion (23), so that the phase cable portion (23) and the wiring cable portion (22) can be connected at the outer circumference of the magnetic member (3), improving the efficiency and convenience of assembly.

As shown in FIG. 7, in some embodiments, the cable 2 includes a phase cable portion 23 and a wiring cable portion 22, and the phase cable portion 23 and the wiring cable portion 22 are connected to each other. The phase cable portion 23 is located in the cable routing cavity 13 and part of the phase cable portion 23 can pass through the central rod cable outlet through-hole 16. The winding 31 has multiple winding leads of the same phase, and multiple winding leads of the same phase are connected in series through the wiring cable portion 22. That is to say, the wiring cable portion 22 is connected in series with the winding leads of the same phase, and the wiring cable portion 22 is connected to the phase cable portion 23, thereby realizing the electrical connection between the cable 2 and the magnetic member 3. For example, the series connection of multiple winding leads of the same phase through the wiring cable portion 22 and the connection between the phase cable portion 23 and the wiring cable portion 22 can be carried out independently, which is conducive to improving assembly efficiency and achieving mass production.

As shown in FIG. 7, the cable outlet device 4 has a cable channel 41. The cable channel 41 can fix the phase cable portion 23, and the outlet of the cable channel 41 can be aligned with the corresponding central rod cable outlet through-hole 16. By providing the cable channel 41 on the cable outlet device 4, the outlet direction of the phase cable portion 23 can be guided and the movement of the phase cable portion 23 can be restricted. The cable outlet device 4 can extend along the axial direction of the central rod 1, and the maximum outer diameter of the cable outlet device 4 is smaller than the minimum inner diameter of the central rod 1, so that the cable outlet device 4 can be accommodated in the cable routing cavity 13. The phase cable portion 23 can be partially arranged inside the cable outlet device 4. The cable outlet device 4 is configured in the cable routing cavity 13 of the central rod 1, and the cable channel 41 passes through the cable outlet device 4 along the axial direction of the cable outlet device 4 (the up and down direction as shown in FIG. 1). As shown in FIG. 7, the cable channel 41 includes a cable threading hole inlet and a cable threading hole outlet. The cable threading hole outlet here is the outlet of the cable channel 41, and the cable threading hole outlet is aligned with the corresponding central rod cable outlet through-hole 16. The cable threading hole inlet and the cable threading hole outlet are located at the two ends of the cable channel 41 in the axial direction. The cable threading hole inlet is close to the upper end of the first rod segment 11, and the cable threading hole outlet is close to the upper end of the second rod segment 12. The phase cable portion 23 enters the cable channel 41 from the cable threading hole inlet, and the phase cable portion 23 passes through the cable channel 41 from the cable threading hole outlet, and then the phase cable portion 23 passes through the central rod cable outlet through-hole 16 corresponding to the outlet of the cable channel 41.

For example, the interior of the cable outlet device 4 is a whole cavity structure, and the cable threading hole inlet and the cable threading hole outlet are both connected to the cavity structure inside the cable outlet device 4.

In some embodiments, there are multiple windings 31 of the same phase, and the wiring cable portion 22 is divided into multiple sections. The winding leads of adjacent and same-phase windings 31 are connected in series through the corresponding wiring cable portions 22. The winding leads and the wiring cable portions 22 are connected and assembled and can be split, which is conducive to improving assembly efficiency and achieving mass production.

For example, when winding 31 is a three-phase winding, winding 31 includes a U-phase winding, a V-phase winding, and a W-phase winding. The following uses multiple U-phase windings, such as a first U-phase winding, a second U-phase winding, and a third U-phase winding, as examples to illustrate a connection structure in which multiple same-phase winding ends are connected in series via wiring cable portion 22.

The U-phase winding is wound by the U-phase winding, and the U-phase winding is installed in the winding slot. The winding leads of the U-phase winding are U-phase one end and U-phase two end respectively. The U-phase one end is the starting end of the U-phase winding, and the U-phase two end is the end of the U-phase winding, wherein the U-phase one end and the U-phase two end are both led to the outside of the magnetic member 3, and the U-phase two ends of the first U-phase winding can be connected to the U-phase one end of the second U-phase winding through the wiring cable portion 22, and the U-phase two ends of the second U-phase set can be connected to the U-phase one end of the third U-phase winding through the wiring cable portion 22, and the U-phase two ends of the third U-phase winding can be connected to the U-phase one end of the fourth U-phase winding through the wiring cable portion 22. If the U-phase winding includes N, where N is a positive integer, then after multiple winding ends of the same phase are connected in series through the wiring cable portion 22, only the U-phase one end of the first U-phase winding and the U-phase two ends of the Nth U-phase winding are left unconnected. According to the above embodiment, the U-phase ends of the N-th U-phase winding can be connected to the phase cable portion 23 via the wiring cable portion 22. The V-phase winding and the W-phase winding are similar and will not be described in detail here.

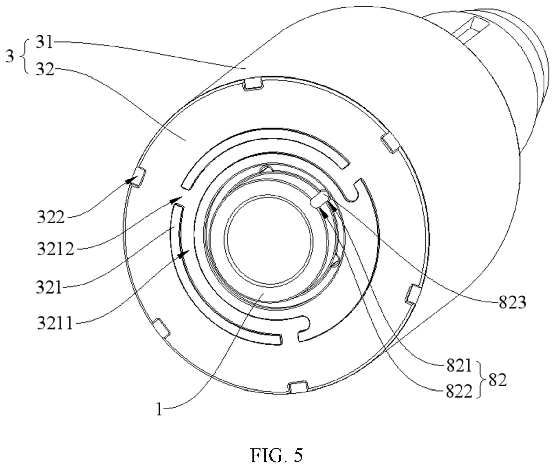

As shown in FIG. 5, in some embodiments, a plurality of wire outlet slots 322 are provided on the outer circumference of the iron core 32. The plurality of wire outlet slots 322 are spaced apart along the circumference of the iron core 32. At least a portion of the wiring cable portion 22 can be embedded within the wire outlet slots 322. This means that the winding ends can be led out to the outer circumference of the magnetic member 3. The winding ends can be connected to the wiring cable portion 22 within the corresponding wire outlet slots 322 on the outer circumference of the magnetic member 3. This increases the tool operation space and the assembly space, thereby reducing the assembly difficulty and improving the assembly efficiency. This is beneficial for mass production and makes it easier to visually detect problems during subsequent maintenance, thereby reducing maintenance costs. The bottom end of the iron core 32 is provided with a plurality of reinforcing ribs 321. The plurality of reinforcing ribs 321 are spaced apart to form wire inlet passages 3212. The wiring cable portion 22 can be connected to the wiring cable portion 22 of other phases through the corresponding wire outlet slots 322 and wire inlet passages 3212. This arrangement can make the structure more compact.

For example, the number of wire outlet slots 322 is a positive integer multiple of the total number of phases of the winding 31. The number of wire outlet slots 322 is Z, and the total number of phases of the winding 31 is M. If Q = Z/M, then Q is a positive integer. For example, if M = 3, Z can be a multiple of three, such as 3, 6, 9, or 12. This arrangement can make the spatial arrangement of the multi-phase winding 31 symmetrical, and the electric potential and magnetic potential generated by each phase winding 31 should be symmetrical, thereby improving the stability and reliability of the electromagnetic damper 1000. It can also meet the various outlet arrangement requirements of the winding leads of the winding 31.

As shown in FIGS. 1 and 5, in some embodiments, the magnetic member 3 includes a plurality of windings 31 and a plurality of iron cores 32. The windings 31 and the iron cores 32 can be alternately stacked in sequence along the axial direction of the central rod 1, that is, an iron core 32 is sandwiched between two adjacent windings 31. The wiring cable portion 22 extends along the axial direction of the magnetic member 3. The outer end leads of the windings 31 are winding leads. The wiring cable portion 22 includes three-phase wiring, and the same-phase windings 31 can be connected through the corresponding same-phase wiring cable portions 22. Specifically, the electromagnetic damper 1000 is a linear motor, and the mover 600 of the electromagnetic damper 1000 performs linear motion relative to the stator 100 of the electromagnetic damper 1000. The structure of multiple windings 31 and multiple iron cores 32 can enhance the strength of the magnetic field generated by the magnetic member 3. The iron core 32 can concentrate and guide the magnetic field, making the magnetic field stronger and more stable, and improving the working efficiency of the magnetic member 3.

For example, the windings 31 and iron cores 32 are both annular. The magnetic member 3 is composed of multiple windings 31 and iron cores 32 stacked one layer at a time. The windings 31 and iron cores 32 are stacked along the axial direction of the central rod 1. After stacking, the magnetic member 3 is sleeved on the central rod 1, ultimately forming a cylindrical shape. The windings 31 are formed by stacking windings from the inside outward, one coil at a time, until the final coil at the outermost end, forming a coiled spring-like spiral structure. The innermost winding ends are radially extended to the outermost layer. There are three or six wire outlet slots 322 evenly distributed on the circumference of each iron core 32. The wire outlet slots 322 can constrain the wire outlet direction. The winding end of each layer of winding 31 is led out from the designated wire outlet slot 322. According to the principle that the three-phase lines must be connected together in the same phase, the same-phase winding 31 can be led out along the wire outlet slots 322 at the same angle, so that the same-phase winding ends can be easily connected from top to bottom from the outside of the magnetic member 3 using the corresponding wiring cable portion 22. It is worth noting that the winding of each layer of winding 31 of the magnetic member 3 is superimposed from the inside to the outside until the last circle on the outermost side, and the winding lead at the innermost end is also radially led out to the outside of the outermost layer. Therefore, after the winding of each layer of winding 31 of the magnetic member 3 of the present application is completed, the wire is output from the outside of the magnetic member 3, and the winding lead is also connected to the cable 2 on the outside of the magnetic member 3. This winding 31 output from the outside is not only simple to thread back and forth and assemble, saves materials, but also effectively utilizes the design space. The connection on the outside of the magnetic member 3 has a greater tool operation space, which is conducive to assembly, and the output wire contact is more stable. It is also easy to troubleshoot during later maintenance, reducing maintenance costs.

The iron core 32 and the winding 31 are arranged alternately along the axial direction of the central rod 1, and the winding leads are connected to the wiring cable portion 22 through the wire outlet slot 322 set on the iron core 32. The wire outlet slot 322 is not only convenient as a wire outlet, but also can fix the wiring cable portion 22, so as to facilitate the connection of the same-phase winding leads of each layer through the wiring cable portion 22. The same-phase winding leads are connected through the wiring cable portion 22, and the wiring cable portion 22 is embedded in the wire outlet slot 322. On the one hand, it can fix the wiring cable portion 22 and reduce the shaking of the wiring cable portion 22; on the other hand, the structure is simple, the fixation reliability is high, and it is easy to assemble.

Optionally, the magnetic member 3 may include an iron core 32 and multiple windings 31. The iron core 32 is provided with multiple winding slots, the winding slots can be installed with the windings 31, and the winding slots can extend radially. Multiple wire outlet slots 322 are provided on the outer peripheral surface of the iron core 32, and the wire outlet slots 322 can extend axially.

For example, after the U-phase end of the first U-phase winding 31, the V-phase end of the first V-phase winding 31, and the W-phase end of the first W-phase winding 31 are connected to the wiring cable portions 22 of the corresponding phases, the different wiring cable portions 22 can be connected after passing through the corresponding wire outlet slots 322 and wire inlet passages 3212. The number of wire inlet passages 3212 is equal to the total number of phases of the winding 31. In the radial direction of the iron core 32, a wire outlet slot 322 is correspondingly provided on the outside of each wire inlet passage 3212. As a result, the wiring cable portions 22 connecting the ends of the same-phase windings can pass through the corresponding wire outlet slots 322 and the wire inlet passages 3212 provided for the corresponding wire outlet slots 322. This arrangement can make the structure more compact.

For example, a wire harness fixing slot 3211 connected to the wire inlet passage 3212 is defined between multiple reinforcing ribs 321, and part of the wiring cable portion 22 is accommodated in the wire harness fixing slot 3211. By setting the wire harness fixing slot 3211, the wiring cable portion 22 can be constrained to prevent the wiring cable portion 22 from shaking at will, reduce the probability of damage to the wiring cable portion 22, and improve the service life of the wiring cable portion 22.

As shown in FIG. 10, in some embodiments, one axial end of the cable outlet device 4 has a cable threading hole inlet, and the other axial end of the cable outlet device 4 has a cable threading hole outlet. The cable 2 can pass through the cable threading hole inlet and the cable threading hole outlet. There are multiple cable threading hole outlets, and the multiple cable threading hole outlets are spaced apart along the axis of the cable outlet device 4. The cable threading hole outlets can be aligned with the corresponding central rod cable outlet through-holes 16, thereby reducing the probability of the cable 2 being squeezed.

As shown in FIG. 10, in some embodiments, the cable threading hole inlet and the cable threading hole outlet correspond one to one, and a cable channel 41 for fixing the corresponding cable 2 is formed between the cable threading hole inlet and the corresponding cable threading hole outlet, and the diameter of the cable channel 41 differs from the outer diameter of the fixed cable 2 by no more than 5 mm. The cable channel 41 can fix the cable 2, and the cable threading hole outlet of the cable channel 41 can be aligned with the corresponding central rod cable outlet through-hole 16. By providing the cable channel 41 on the cable outlet device 4, the outlet direction of the cable 2 can be guided and the movement of the cable 2 can be constrained. In addition, since the diameter of the cable channel 41 differs from the outer diameter of the fixed cable 2 by no more than 5 mm, the fixing, the restraining effect of the cable channel 41 on the cable 2 can be improved. Optionally, the diameter of the cable channel 41 differs from the outer diameter of the fixed cable 2 by 1 mm, 2 mm, 3 mm, 4 mm, 5 mm, etc.

As shown in FIGS. 1, 3, 4 and 10, for example, the cable outlet device 4 is arranged in the cable routing cavity 13 of the central rod 1, and the cable channel 41 passes through the cable outlet device 4 along the axial direction of the cable outlet device 4 (the up and down direction as shown in FIG. 1). As shown in FIGS. 1 and 10, the cable channel 41 includes a cable threading hole inlet and a cable threading hole outlet. The cable threading hole outlet here is the outlet of the cable channel 41, and the cable threading hole outlet is aligned with the corresponding central rod cable outlet through-hole 16. The cable threading hole inlet and the cable threading hole outlet are located at the two ends of the cable channel 41 in the axial direction. The cable threading hole inlet is close to the upper end of the first rod segment 11, and the cable threading hole outlet is close to the upper end of the second rod segment 12. The cable 2 enters the cable channel 41 from the cable threading hole inlet, and the cable 2 passes through the cable channel 41 from the cable threading hole outlet. Then, the cable 2 passes through the central rod cable outlet through-hole 16 corresponding to the cable threading hole outlet of the cable channel 41.

As shown in FIGS. 1 to 3 and FIG. 8, in some embodiments, the magnetic member 3 includes an iron core 32 and a winding 31. The iron core 32 includes a plurality of winding slots, and the plurality of winding slots are dispersed along the axial direction of the iron core 32. The winding 31 can be wound in the winding slots, and the winding slots can position and install the winding 31. The outer end lead of the winding 31 is a winding lead, and the winding lead can be connected to the cable 2, so that the electrical connection between the magnetic member 3 and the cable 2 can be achieved. The winding lead is the outer end lead of the winding 31, which is convenient for performing the electrical connection operation between the magnetic member 3 and the cable 2 from the peripheral space of the magnetic member 3. The operating space is large and relatively convenient. By arranging the winding 31 in the winding slot, the structure of the magnetic member 3 can be simplified, and the internal structure of the magnetic member 3 can be made more compact.

As shown in FIGS. 1 to 3, in some embodiments, the cable 2 includes a phase cable portion 23 and a wiring cable portion 22, and the phase cable portion 23 and the wiring cable portion 22 are connected to each other. The phase cable portion 23 is located in the cable routing cavity 13 and part of the phase cable portion 23 can pass through the central rod cable outlet through-hole 16. The winding 31 has multiple winding leads of the same phase, and multiple winding leads of the same phase are connected in series through the wiring cable portion 22. That is to say, the wiring cable portion 22 is connected in series with the winding leads of the same phase, and the wiring cable portion 22 is connected to the phase cable portion 23, thereby realizing the electrical connection between the cable 2 and the magnetic member 3. For example, the series connection of multiple winding leads of the same phase through the wiring cable portion 22 and the connection between the phase cable portion 23 and the wiring cable portion 22 can be carried out independently, which is conducive to improving assembly efficiency and achieving mass production. In conjunction with the above embodiment, the cable 2 includes a phase cable portion 23 and a wiring cable portion 22. The phase cable portion 23 is located within the cable routing cavity 13, and a portion of the phase cable portion 23 can be passed through the central rod cable outlet through-hole 16. The wiring cable portion 22 is arranged on the periphery of the magnetic member 3 and connected to the phase cable portion 23. As a result, the phase cable portion 23 can be connected to the wiring cable portion 22 on the periphery of the magnetic member 3, improving assembly efficiency and convenience. As shown in FIG. 10, the cable outlet device 4 has a cable channel 41. The cable channel 41 can fix the phase cable portion 23, and the outlet of the cable channel 41 can be aligned with the corresponding central rod cable outlet through-hole 16. By providing the cable channel 41 on the cable outlet device 4, the outlet direction of the phase cable portion 23 can be guided and the movement of the phase cable portion 23 can be restricted. The cable outlet device 4 can extend along the axial direction of the central rod 1, and the maximum outer diameter of the cable outlet device 4 is smaller than the minimum inner diameter of the central rod 1, so that the cable outlet device 4 can be accommodated in the cable routing cavity 13. The phase cable portion 23 can be partially arranged inside the cable outlet device 4. The cable outlet device 4 is arranged in the cable routing cavity 13 of the central rod 1, and the cable channel 41 passes through the cable outlet device 4 along the axial direction of the cable outlet device 4 (the up and down direction as shown in FIG. 1). As shown in FIG. 10, the cable channel 41 includes a cable threading hole inlet and a cable threading hole outlet. The cable threading hole outlet here is the outlet of the cable channel 41, and the cable threading hole outlet is aligned with the corresponding central rod cable outlet through-hole 16. The cable threading hole inlet and the cable threading hole outlet are located at the two ends of the cable channel 41 in the axial direction. The cable threading hole inlet is close to the upper end of the first rod segment 11, and the cable threading hole outlet is close to the upper end of the second rod segment 12. The phase cable portion 23 enters the cable channel 41 from the cable threading hole inlet, and the phase cable portion 23 passes through the cable channel 41 from the cable threading hole outlet, and then the phase cable portion 23 passes through the central rod cable outlet through-hole 16 corresponding to the outlet of the cable channel 41.

For example, the interior of the cable outlet device 4 is a whole cavity structure, and the cable threading hole inlet and the cable threading hole outlet are both connected to the cavity structure inside the cable outlet device 4.

In some embodiments, there are multiple windings 31 of the same phase, and the wiring cable portion 22 is divided into multiple sections. The winding leads of adjacent and same-phase windings 31 are connected in series through the corresponding wiring cable portions 22. The winding leads and the wiring cable portions 22 are connected and assembled and can be further split, which is conducive to improving assembly efficiency and achieving mass production.

For example, when winding 31 is a three-phase winding, winding 31 includes a U-phase winding, a V-phase winding, and a W-phase winding. The following uses multiple U-phase windings, such as a first U-phase winding, a second U-phase winding, and a third U-phase winding, as examples to illustrate a connection structure in which multiple same-phase winding ends are connected in series via wiring cable portion 22.

The U-phase winding is wound by the U-phase winding, and the U-phase winding is installed in the winding slot. The winding leads of the U-phase winding are U-phase one end and U-phase two end respectively. The U-phase one end is the starting end of the U-phase winding, and the U-phase two end is the end of the U-phase winding, wherein the U-phase one end and the U-phase two end are both led to the outside of the magnetic member 3, and the U-phase two ends of the first U-phase winding can be connected to the U-phase one end of the second U-phase winding through the wiring cable portion 22, and the U-phase two ends of the second U-phase set can be connected to the U-phase one end of the third U-phase winding through the wiring cable portion 22, and the U-phase two ends of the third U-phase winding can be connected to the U-phase one end of the fourth U-phase winding through the wiring cable portion 22. If the U-phase winding includes N, where N is a positive integer, then after multiple winding ends of the same phase are connected in series through the wiring cable portion 22, only the U-phase one end of the first U-phase winding and the U-phase two ends of the Nth U-phase winding are left unconnected. According to the above embodiment, the U-phase ends of the N-th U-phase winding can be connected to the phase cable portion 23 via the wiring cable portion 22. The V-phase winding and the W-phase winding are similar and will not be described in detail here.

As shown in FIG8, in some embodiments, a plurality of wire outlet slots 322 are provided on the outer circumference of the iron core 32. The plurality of wire outlet slots 322 are spaced apart along the circumference of the iron core 32. At least a portion of the wiring cable portion 22 can be embedded within the wire outlet slots 322. This means that the winding ends can be led out to the outer circumference of the magnetic member 3. The winding ends can be connected to the wiring cable portion 22 within the corresponding wire outlet slots 322 on the outer circumference of the magnetic member 3. This increases the tool operation space and the assembly space, thereby reducing the assembly difficulty and improving the assembly efficiency. This is beneficial for mass production and makes it easier to visually detect problems during subsequent maintenance, thereby reducing maintenance costs. The bottom end of the iron core 32 is provided with a plurality of reinforcing ribs 321. The plurality of reinforcing ribs 321 are spaced apart to form wire inlet passages 3212. The wiring cable portion 22 can be connected to the wiring cable portion 22 of other phases through the corresponding wire outlet slots 322 and wire inlet passages 3212. This arrangement can make the structure more compact.

For example, the number of wire outlet slots 322 is a positive integer multiple of the total number of phases of the winding 31. The number of wire outlet slots 322 is Z, and the total number of phases of the winding 31 is M. If Q = Z/M, then Q is a positive integer. For example, if M = 3, Z can be a multiple of three, such as 3, 6, 9, or 12. This arrangement can make the spatial arrangement of the multi-phase winding 31 symmetrical, and the electric potential and magnetic potential generated by each phase winding 31 should be symmetrical, thereby improving the stability and reliability of the electromagnetic damper 1000. It can also meet the various outlet arrangement requirements of the winding leads of the winding 31.

In some embodiments, the magnetic member 3 includes a plurality of windings 31 and a plurality of iron cores 32. The windings 31 and the iron cores 32 can be alternately stacked in sequence along the axial direction of the central rod 1, that is, an iron core 32 is sandwiched between two adjacent windings 31. The wiring cable portion 22 extends along the axial direction of the magnetic member 3. The outer end leads of the windings 31 are winding leads. The wiring cable portion 22 includes three-phase wiring, and the same-phase windings 31 can be connected through the corresponding same-phase wiring cable portions 22. Specifically, the electromagnetic damper 1000 is a linear motor, and the mover 600 of the electromagnetic damper 1000 performs linear motion relative to the stator 100 of the electromagnetic damper 1000. The structure of multiple windings 31 and multiple iron cores 32 can enhance the strength of the magnetic field generated by the magnetic member 3. The iron core 32 can concentrate and guide the magnetic field, making the magnetic field stronger and more stable, and improving the working efficiency of the magnetic member 3.

For example, the windings 31 and iron cores 32 are both annular. The magnetic member 3 is composed of multiple windings 31 and iron cores 32 stacked one layer at a time. The windings 31 and iron cores 32 are stacked along the axial direction of the central rod 1. After stacking, the magnetic member 3 is sleeved on the central rod 1, ultimately forming a cylindrical shape. The windings 31 are formed by stacking windings from the inside outward, one coil at a time, until the final coil at the outermost end, forming a coiled spring-like spiral structure. The innermost winding ends are radially extended to the outermost layer. There are three or six wire outlet slots 322 evenly distributed on the circumference of each iron core 32. The wire outlet slots 322 can constrain the wire outlet direction. The winding end of each layer of winding 31 is led out from the designated wire outlet slot 322. According to the principle that the three-phase lines must be connected together in the same phase, the same-phase winding 31 can be led out along the wire outlet slots 322 at the same angle, so that the same-phase winding ends can be easily connected from top to bottom from the outside of the magnetic member 3 using the corresponding wiring cable portion 22. It is worth noting that the winding of each layer of winding 31 of the magnetic member 3 is superimposed from the inside to the outside until the last circle on the outermost side, and the winding lead at the innermost end is also radially led out to the outside of the outermost layer. Therefore, after the winding of each layer of winding 31 of the magnetic member 3 of the present application is completed, the wire is output from the outside of the magnetic member 3, and the winding lead is also connected to the cable 2 on the outside of the magnetic member 3. This winding 31 output from the outside are not only simple to thread back and forth and assemble, saving materials, but also effectively utilizes the design space. The connection on the outside of the magnetic member 3 has a greater tool operation space, which is conducive to assembly, and the output wire contact is more stable. It is also easy to troubleshoot during later maintenance, reducing maintenance costs.

The iron core 32 and the winding 31 are arranged alternately along the axial direction of the central rod 1, and the winding leads are connected to the wiring cable portion 22 through the wire outlet slot 322 set on the iron core 32. The wire outlet slot 322 is not only convenient for wire outlet, but also can fix the wiring cable portion 22, so as to facilitate the connection of the same-phase winding leads of each layer through the wiring cable portion 22. The same-phase winding leads are connected through the wiring cable portion 22, and the wiring cable portion 22 is embedded in the wire outlet slot 322. On the one hand, it can fix the wiring cable portion 22 and reduce the shaking of the wiring cable portion 22; on the other hand, the structure is simple, the fixation reliability is high, and it is easy to assemble.

Optionally, the magnetic member 3 may include an iron core 32 and multiple windings 31. The iron core 32 is provided with multiple winding slots, the winding slots can be installed with the windings 31, and the winding slots can extend radially. Multiple wire outlet slots 322 are provided on the outer peripheral surface of the iron core 32, and the wire outlet slots 322 can extend axially.

For example, after the U-phase end of the first U-phase winding 31, the V-phase end of the first V-phase winding 31, and the W-phase end of the first W-phase winding 31 are connected to the wiring cable portions 22 of the corresponding phases, the different wiring cable portions 22 can be connected after passing through the corresponding wire outlet slots 322 and wire inlet passages 3212. The number of wire inlet passages 3212 is equal to the total number of phases of the winding 31. In the radial direction of the iron core 32, a wire outlet slot 322 is correspondingly provided on the outside of each wire inlet passage 3212. As a result, the wiring cable portions 22 connecting the ends of the same-phase windings can pass through the corresponding wire outlet slots 322 and the wire inlet passages 3212 provided for the corresponding wire outlet slots 322. This arrangement can make the structure more compact.

For example, a wire harness fixing slot 3211 connected to the wire inlet passage 3212 is defined between multiple reinforcing ribs 321, and part of the wiring cable portion 22 is accommodated in the wire harness fixing slot 3211. By setting the wire harness fixing slot 3211, the wiring cable portion 22 can be constrained to prevent the wiring cable portion 22 from shaking at will, reduce the probability of damage to the wiring cable portion 22, and improve service life of the wiring cable portion 22.

The cable 2 is a three-phase cable 2, and the cable 2 is located in the cable routing cavity 13, so the cable 2 in the figure is the phase cable portion 23.

As shown in FIGS. 1 to 4, the central rod cable outlet through-holes 16 include three, each central rod cable outlet through-hole 16 corresponds to a phase cable portion 23, and the outlet of the cable channel 41 is aligned with the central rod cable outlet through-hole 16. As shown in FIG. 10, there are also three outlets of the cable channel 41 (not fully shown), and the three-phase cable portions 23 respectively pass through the outlets of different cable channels 41 and pass through the corresponding central rod cable outlet through-holes 16, that is, the three-phase cable portions 23 include a U-phase cable portion, a V-phase cable portion and a W-phase cable portion. The U-phase cable portion passes through one cable channel 41 and through one central rod cable outlet through-hole 16, the V-phase cable portion passes through another cable channel 41 and through another central rod cable outlet through-hole 16, and the W-phase cable portion passes through another cable channel 41 and through another central rod cable outlet through-hole 16.

Optionally, on the magnetic member 3, the winding leads of the same-phase winding 31 are connected together by the same-phase wiring cable portion 22 to form a same-phase winding lead group, and the different-phase winding lead groups are connected at the reinforcing ribs 321.

Therefore, the phase cable portion 23 passes through the inner side of the central rod 1 from the outside, passes through the cable threading hole outlet of the cable outlet device 4, and then passes through the central rod cable outlet through-hole 16, and is connected to the wiring cable portion 22 on the outside of the magnetic member 3. The cable outlet is fixed during the whole process, and the cable outlet device 4 plays the role of fixing and protecting the phase cable portion 23, solving the problem of risk of extrusion and scratching in the related technologies.

Optionally, the cable outlet device 4 can use a circular pipe structure, the phase cable portion 23 is fixed in the pipe, and the three-phase cable portions 23 respectively pass through the top and bottom of the three pipes on the cable outlet device 4, and the outlets of the three pipes below the cable outlet device 4 are evenly distributed in the circumferential direction, and the central rod cable outlet through-hole 16 corresponds one by one to the outlets of the three pipes of the cable outlet device 4.

Optionally, three cable threading hole outlets are arranged at equal angles on the cable outlet device 4.

The central rod cable outlet through-hole 16 is set in one-to-one correspondence with the wire outlet slot 322. Specifically, the central rod cable outlet through-hole 16, the wire outlet slot 322 and the cable threading hole outlet of the cable channel 41 are set in one-to-one correspondence, so that the position deviation of the cable 2 is small and the connection is reliable.

For example, the central rod 1 has three central rod cable outlet through-holes 16, three wire outlet slots 322, and three cable threading hole outlets of the cable channel 41, and these three correspond to each other one by one.

As shown in FIG. 7, in some embodiments, the end of the cable 2, away from the magnetic member 3, extends outside the central rod 1. The cable 2 is connected to a plug connector 21. Specifically, the plug connector 21 can be connected to a power source to power the magnetic member 3. The plug connector 21 is a quick-change connector that allows for quick connection to the power source, making operation simple and fast.

As shown in FIG. 1, in some embodiments, the stator (100) further comprises a limit pad (5), the limit pad (5) being fitted over the central rod (1). The central rod (1) comprises the first rod segment (11), the second rod segment (12), and the rod ring structure (15), with the first rod segment (11) and the second rod segment (12) being separated by the rod ring structure (15). A portion of the central rod cable outlet through-hole (16) is formed on the first rod segment (11) and another portion on the rod ring structure (15). The limit pad (5) is a rotational solid component that can be fitted over the first rod segment (11), and the limit pad (5) and the central rod cable outlet through-hole (16) together define a wiring limit hole, through which the cable (2) can pass. Specifically, the central rod cable outlet through-hole (16) comprises a first outlet half hole (111) and a second outlet half hole (152), the first outlet half hole (111) being formed on the first rod segment (11) and the second outlet half hole (152) being formed on the rod ring structure (15); the length of the second outlet half hole (152) in the radial direction of the central rod (1) is greater than the length of the first outlet half hole (111) in the radial direction of the central rod (1). The limit pad (5) has a limit pad half hole, and the limit pad half hole and the central rod cable outlet through-hole (16) together define a wiring limit hole, that is, the limit pad half hole and the second outlet half hole (152) together define a wiring limit hole through which the cable (2) can pass. As a result, the structure of the central rod (1) can be more compact, the wiring limit hole can protect the cable (2), and the rod ring structure (15) can restrict the axial movement of the magnetic member (3), preventing the magnetic member (3) from moving toward the first rod segment (11).

The linear motor according to the embodiment of the present application includes the stator 100 of the above embodiment.

As shown in fig. 1, the electromagnetic damper 1000 according to the embodiment of the present application includes a mover 600 and the stator 100 of the above embodiment. The mover 600 has a mover cavity. The stator 100 is arranged in the mover cavity. The mover 600 can move axially relative to the stator 100.

Specifically, the electromagnetic damper 1000 includes a linear motor, which combines a traditional hydraulic damping shock absorber and a linear motor to form the electromagnetic damper 1000 of the present application. The traditional hydraulic damping shock absorber is a passive vibration absorber and does not require the arrangement of motor output lines. The overall structure of the electromagnetic damper 1000 is based on the traditional hydraulic damping shock absorber, in which the intermediate damper is replaced by a linear motor. Its purpose is to use the linear motor for active vibration reduction on the basis of passive vibration reduction. According to the excitation transmitted by the road surface, active control is achieved by adjusting the magnetic member 3, thereby effectively attenuating the excitation transmitted to the passenger compartment on the path, and ultimately improving the vehicle's passability, smoothness and comfort. According to the structural composition of the electromagnetic damper 1000, it mainly includes a stator 100, a mover 600 and a top mount 700, in which the stator 100 and the mover 600 form a linear motor, and the winding lead of the winding 31 is connected to the stator 100 through the cable 2, and the cable 2 passes through the cable routing cavity 13 of the central rod 1 to the outside of the motor.

According to the electromagnetic damper (1000) of the embodiment of the present application, the integration of multiple functions enables the electromagnetic damper (1000) to have a greater electromagnetic force design space and a high-efficiency operating environment while maintaining normal operation, thereby improving overall competitiveness. Furthermore, the central rod (1) is applicable to the electromagnetic damper (1000). By providing the magnetic member mounting area (122) on the central rod (1), the magnetic member (3) can be secured thereto, avoiding the need for a fixing frame, which is conducive to simplifying the structure of the electromagnetic damper (1000) and rendering the overall structure more compact. By providing the cooling chamber (142) within the peripheral wall (14) of the central rod (1), the central rod (1) can be cooled, thereby cooling the magnetic member (3) installed on the central rod (1), which is conducive to the heat dissipation of the entire electromagnetic damper (1000).

As shown in FIG. 1, in some embodiments, the mover 600 includes a housing 601, a mover magnet 602, and a guide post 6032. The mover magnets 602 are evenly distributed on the inner side of the housing 601, providing a fixed magnetic field. The inner side of the mover magnets 602 forms the mover cavity. The mover magnets 602 are sleeved around the outer periphery of the magnetic member 3 and mounted on the inner wall of the housing 601. The mover magnets 602 are positioned between the housing 601 and the magnetic member 3. The cable 2 is partially positioned between the mover magnet 602 and the magnetic member 3. Specifically, a gap is defined between the mover magnet 602 and the magnetic member 3, through which the cable 2 passes and into the wiring cable limit passage of the first rod segment 11. When the mover magnet 602 linearly moves axially relative to the magnetic member 3, interference with the cable 2 is avoided, and the structure of the electromagnetic damper 1000 is more compact. The guide-post 6032 is connected to the housing 601, and the guide-post 6032 can also be connected to the lower control arm of the vehicle 10000. The hollow cavity includes a guide cavity 19. At least part of the guide-post 6032 can extend into the guide cavity 19 and can move axially along the central rod 1, that is, the guide-post 6032 plays a guiding role, thereby improving the stability and reliability of the axial movement of the mover 600.

For example, the mover magnet (602) is composed of a plurality of mover magnet units assembled and fixed on the inner side of the housing (601), evenly distributed along the circumference. The magnetic field force generated thereby interacts with the magnetic member (3) fixed on the central rod (1), ultimately realizing relative movement between the mover (600) and the stator (100).

As shown in FIG. 1, for example, the mover 600 includes a housing 601 and a clevis 603. The mover magnet 602 is mounted on the inner wall of the housing 601. The clevis 603 can be connected to the housing 601. The clevis 603 is also used to connect to the lower control arm of the subframe. Specifically, the clevis 603 and the lower control arm are assembled to the subframe in conjunction with each other. The clevis 603 and the housing 601 are connected by bolts, together forming a closed operating environment inside the electromagnetic damper 1000. The connection between the electromagnetic damper 1000 and the vehicle 10000 is achieved through the housing 601 and the clevis 603, and the structural layout is reasonable.

As shown in FIG. 1, one end of the housing 601 is connected to a clevis 603, which is provided with a guide-post 6032. The guide-post 6032 is located near the second rod segment 12 of the central rod 1. The other end of the housing 601 forms a housing bore 6012, through which the central rod 1 can pass. When the mover 600 moves, the housing 601 moves accordingly. When the mover 600 is in the first extreme position, the central rod 1 protrudes the most from the housing bore 6012. When the mover 600 is in the second extreme position, the central rod 1 protrudes the least from the housing bore 6012. The intermediate position of the mover 600 is between the first and second extreme positions. In other words, the housing 601 moves relative to the central rod 1 at the housing bore 6012, and the guide-post 6032 moves relative to the central rod 1 at the opening of the second rod segment 12. For example, the first plain bearing 6041 is embedded in the housing bore 6012 of the housing 601. Specifically, the first plain bearing 6041 is embedded in the frustum of the housing bore 6012. The frustum can be radially staggered with the upper support member 701, thereby increasing the axial space of the electromagnetic damper 1000.

As shown in FIG. 1, optionally, the clevis 603 includes a clevis body 6031, a guide post 6032 connected to the side of the clevis body 6031 facing the central rod 1, and the mover 600 further includes a buffer pad 605, which is located between the clevis body 6031 and the central rod 1, and the buffer pad 605 is sleeved on the guide post 6032 and is located outside the end of the central rod 1. When the mover 600 moves to the second extreme position, the buffer pad 605 can absorb the collision of the clevis body 6031 on the central rod 1, and can buffer the impact of the mover 600 on the stator 100 under extreme working conditions, thereby protecting the magnetic member 3 on the stator 100, playing a protective role and reducing noise.

For example, one end of the second rod segment 12 of the central rod 1 is connected to the first rod segment 11. The other end of the second rod segment 12 has an opening that communicates with the guide cavity 19. The guide-post 6032 can pass through the opening and extend into the guide cavity 19. When the mover 600 moves, the mover 600 has a first extreme position, a second extreme position, and an intermediate position. When the mover 600 is in the first extreme position, the guide-post 6032 extends the least into the guide cavity 19. When the mover 600 is in the second extreme position, the guide-post 6032 extends the most into the guide cavity 19. The intermediate position of the mover 600 is between the first and second extreme positions.

As shown in FIG. 1, in some embodiments, the electromagnetic damper 1000 also includes a first plain bearing 6041 and a second plain bearing 6042, the housing 601 has a housing bore 6012, the central rod 1 passes through the housing bore 6012 to partially extend out of the housing 601, the first plain bearing 6041 is arranged between the housing bore 6012 and the outer peripheral surface of the central rod 1, and the second plain bearing 6042 is arranged between the outer peripheral surface of the guide post 6032 and the cavity wall of the hollow cavity. That is to say, the first plain bearing 6041 is arranged at the plug-in fitting between the housing 601 and the central rod 1, and the second plain bearing 6042 is arranged at the plug-in fitting between the guide post 6032 and the guide cavity 19, that is, the first plain bearing 6041 is arranged at the housing bore 6012 of the housing 601, and the second plain bearing 6042 is arranged at the opening of the second rod segment 12. By arranging the first plain bearing 6041 and the second plain bearing 6042, the sliding of the mover 600 can be made smoother, the operation accuracy of the electromagnetic damper 1000 can be improved, and the noise can be reduced.

As shown in FIG. 1, in some embodiments, the mover (600) further comprises a buffer pad (605), the buffer pad (605) being fitted over the guide-post (6032) and located outside an end of the central rod (1).

As shown in FIG. 1, in some embodiments, the electromagnetic damper 1000 further includes a top mount 700. A spring 607 is disposed between the top mount 700 and the housing 601. A local protrusion in the housing 601 supports the spring 607 and dissipates heat throughout the housing. The spring 607 can also cushion road impacts. The top mount 700 includes an upper support member 701, which can be connected to the vehicle body. The central rod 1 can pass through the upper support member 701 to allow the cable 2 to pass through the top mount 700 and out of the vehicle body. This connection between the electromagnetic damper 1000 and the vehicle body 10000 is achieved through the upper support member 701. The top mount 700 cooperates with the housing 601 and seals the interior of the housing 601, that is, the interior of the electromagnetic damper 1000 is in a sealed state, which improves the stability and reliability of operation; a first threaded segment 171 is provided on the central rod 1, and the fastening nut 702 is located on the side of the upper support member 701 away from the mover 600, and the fastening nut 702 is screwed to the first threaded segment 171. By cooperating with the fastening nut 702 and the first threaded segment 171, the stator 100 can be assembled to the top mount 700, which improves the stability and reliability of the connection and is easy to assemble. The central rod 1 has an end shoulder 113, and the upper support member 701 can stop at the end shoulder 113; the fastening nut 702 is located on the side of the upper support member 701 away from the mover 600, and the fastening nut 702 can be screwed to the first threaded segment 171 on the central rod 1, and the upper support member 701 is clamped between the fastening nut 702 and the end shoulder 113; the cooler 608 is fixed on the central rod 1, and the cooling chamber 142 inside the central rod 1 can exchange heat with the cooler 608 to realize heat exchange.

As shown in FIG. 1, the top mount 700 can be fixed on the vehicle body, the central rod 1 passes through the middle of the upper support member 701, and the cable 2 also passes through the vehicle body to reach the front cabin, and by means of a quick-change connector, i.e., the plug connector 21, cooperates with and connects to the electronic control system, thereby ultimately enabling control of the electromagnetic damper 1000.

As shown in FIG. 1, for example, a dust cover 606 is provided at the connection between the central rod 1 and the housing 601 to prevent dust and other impurities from entering the interior of the housing 601.

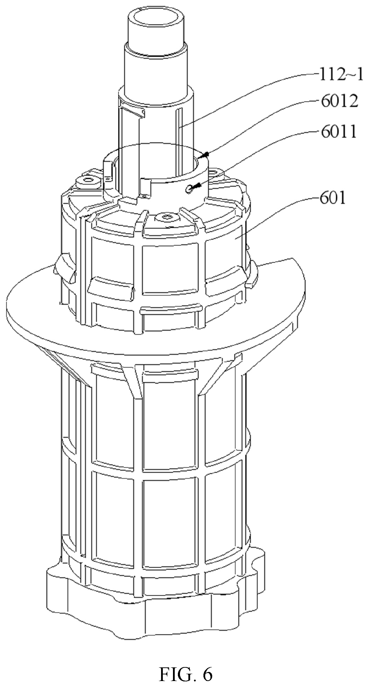

As shown in FIG. 6, in some embodiments, the housing (601) is provided with positioning holes (6011), and a positioning pin can be inserted through the positioning hole (6011) and cooperate with the anti-rotation groove (112) extending axially on the central rod (1), so as to restrict rotation of the housing (601) relative to the central rod (1).

As shown in FIG. 8, the suspension system (2000) according to an embodiment of the present application comprises the electromagnetic damper (1000) according to an embodiment of the present application. By providing the electromagnetic damper (1000) described above, the magnetic member mounting area (122) on the central rod (1) is used to secure the magnetic member (3), avoiding the need for a fixing frame, which is conducive to simplifying the structure of the electromagnetic damper (1000) and rendering the overall structure more compact. By providing the cooling chamber (142) within the peripheral wall (14) of the central rod (1), the central rod (1) can be cooled, thereby cooling the magnetic member (3) installed on the central rod (1), which is conducive to the heat dissipation of the entire electromagnetic damper (1000).

As shown in FIG. 9, the vehicle (10000) according to an embodiment of the present application comprises the suspension system (2000) of the foregoing embodiments.

It is to be emphasized that the central rod (1) of the present application has a multilayered peripheral wall (14) from the outer surface to the inner surface, with different layers cleverly cooperating with surrounding components, so that the central rod (1) serves multiple functions. The central rod (1) of the present application fully cooperates with the top mount (700), the windings (31), the iron cores (32), and the housing (601), enabling the same axial space to realize basic functions such as guidance while satisfying the spatial constraints of external boundaries such as the top mount (700) and the clevis (603), thereby freeing up more valuable axial space for the design of the electromagnetic damper (1000) and thus achieving better electromagnetic thrust performance. The peripheral wall (14) of the central rod (1) is hollow, with the first cooling chamber (1424) and the second cooling chamber (1423) formed between the outer surface and the inner surface of the peripheral wall (14). The first cooling chamber (1424) is adjacent to the outer surface of the peripheral wall (14). As seen in cross-section, three chamber groups are offset from three central rod cable outlet through-holes (16), and each group is composed of a plurality of sub-cooling chambers (14241), which are polygonal in cross-section. The first cooling chamber (1424) is sealed from the outside of the central rod (1) but is interconnected between the first rod segment (11) and the second rod segment (12) of the central rod (1), and is internally filled with a cooling medium, corresponding to one cooling scheme. The second cooling chamber (1423) is adjacent to the inner side of the central rod (1) and is present only in the first rod segment (11) of the central rod (1), offset from the magnetic member (3) fitted over the second rod segment (12) of the central rod (1). As seen in cross-section, it is divided into two groups, and the central rod (1) has a medium inlet and a medium outlet (14212) respectively. The medium inlet and the medium outlet (14212) of the second cooling chamber (1423) are interconnected in a U-shaped channel-like passage; the cooling medium enters from the medium inlet and exits from the medium outlet (14212), carrying heat to the outside, corresponding to another cooling scheme. The two cooling schemes, each targeting different heat dissipation requirements, dissipate heat from different parts of the electromagnetic damper (1000) separately, interacting with each other to ultimately ensure the efficient operation of the electromagnetic damper (1000). Throughout the entire cooling process, the central rod (1) serves the function of rapid heat conduction and heat dissipation.

The additional aspects and advantages of the present application will be given in part in the description below, and in part will become apparent from the description below, or will be learned through practice of the present application.

Other structures and operations of the vehicle 10000 according to the embodiment of the present application are known to ordinary technicians in this field and will not be described in detail here.

In the description of this application, "first feature" and "second feature" may include one or more of these features. The up-down direction, left-right direction and front-back direction shall be based on the up-down direction, left-right direction and front-back direction shown in the figure.

In the description of this application, unless otherwise expressly specified or limited, a first feature being "above" or "below" a second feature may include the first and second features being in direct contact, or the first and second features being in contact not directly but through another feature therebetween. Furthermore, a first feature being "above," "above," and "above" a second feature may include the first feature being directly above or obliquely above the second feature, or may simply mean that the first feature is higher in level than the second feature.

Throughout this specification, reference to terms such as "one embodiment," "some embodiments," "illustrative embodiments," "examples," "specific examples," or "some examples" means that the specific features, structures, materials, or characteristics described in conjunction with the embodiment or example are included in at least one embodiment or example of the present application. In this specification, the illustrative expressions of the above terms do not necessarily refer to the same embodiment or example. Moreover, the specific features, structures, materials, or characteristics described may be combined in any suitable manner in any one or more embodiments or examples.

Although the embodiments of the present application have been shown and described, those skilled in the art will appreciate that various changes, modifications, substitutions, and variations may be made to the embodiments without departing from the principles and intent of the present application, and that the scope of the present application is defined by the claims and their equivalents.

## Claims

1. A central rod (1), wherein an interior of the central rod (1) has a hollow cavity, a peripheral wall (14) of the central rod (1) is formed with a central rod cable outlet through-hole (16) communicating with the hollow cavity, the peripheral wall (14) of the central rod (1) further has a magnetic member mounting area (122) for mounting a magnetic member (3), and the central rod (1) further has a cooling chamber (142), the cooling chamber (142) being adapted to accommodate a cooling medium.

2. The central rod (1) according to claim 1, wherein the cooling chamber (142) extends along the circumferential direction of the central rod (1) around the axis of the central rod (1).

3. The central rod (1) according to claim 1 or 2, wherein the cooling chamber (142) has a multi-layer structure, and the multi-layer structure is spaced apart along the radial direction of the central rod (1).

4. The central rod (1) according to any one of claims 1 to 3, wherein the cooling chamber (142) comprises a first cooling chamber (1424), the first cooling chamber (1424) is located on a radially inner side of the magnetic member mounting area (122), and a projection of the first cooling chamber (1424) in the radial direction of the central rod (1) at least partially overlaps with a projection of the magnetic member mounting area (122) in the radial direction of the central rod (1).

5. The central rod (1) according to claim 4, wherein the first cooling chamber (1424) is a closed chamber.

6. The central rod (1) according to claim 4 or 5, wherein the first cooling chamber (1424) comprises a plurality of chamber groups, and the plurality of chamber groups are spaced apart along the circumferential direction of the central rod (1).

7. The central rod (1) according to claim 6, wherein the central rod cable outlet through-hole (16) is provided in plurality, and in the circumferential direction of the central rod (1), each central rod cable outlet through-hole (16) is formed between two adjacent chamber groups.

8. The central rod (1) according to claim 6, wherein each chamber group comprises a plurality of sub-cooling chambers (14241), and the plurality of sub-cooling chambers (14241) are spaced apart along the circumferential direction of the central rod (1).

9. The central rod (1) according to any one of claims 4 to 8, wherein the cooling chamber (142) further comprises a second cooling chamber (1423), the second cooling chamber (1423) extends along the circumferential direction of the central rod (1) around the axis of the central rod (1), and the first cooling chamber (1424) is at least partially disposed surrounding the outer circumference of the second cooling chamber (1423).

10. The central rod (1) according to claim 9, wherein, in the radial direction of the central rod (1), a minimum distance from the second cooling chamber (1423) to the hollow cavity is less than a minimum distance from the first cooling chamber (1424) to the outer circumferential surface of the central rod (1).

11. The central rod (1) according to claim 9 or 10,
wherein the central rod (1) comprises a first rod segment (11) and a second rod segment (12), the magnetic member mounting area (122) is located on the second rod segment (12), the first cooling chamber (1424) extends from the first rod segment (11) into the second rod segment (12), the second cooling chamber (1423) is disposed within the first rod segment (11), and an end of the first rod segment (11) remote from the second rod segment (12) is provided with a medium inlet (14211) and a medium outlet (14212), both of which communicate with the second cooling chamber (1423).

12. The central rod (1) according to claim 11, wherein the hollow cavity comprises a cable routing cavity (13) located within the first rod segment (11) and a guide cavity (19) located within the second rod segment (12), and a diameter of the guide cavity (19) is greater than a diameter of the cable routing cavity (13).

13. The central rod (1) according to claim 11 or 12, wherein the central rod (1) further comprises a rod ring structure (15), an outer diameter of the rod ring structure (15) is greater than an outer diameter of the second rod segment (12), and the rod ring structure (15) is configured to axially stop the magnetic member (3) in the axial direction of the central rod (1).

14. The central rod (1) according to claim 13, wherein the central rod cable outlet through-hole (16) is formed on a side of the rod ring structure (15) facing away from the second rod segment (12).

15. The central rod (1) according to claim 13 or 14, wherein an end of the second rod segment (12) remote from the first rod segment (11) is provided with a second threaded segment (172), the second threaded segment (172) is configured to threadedly engage with a limit nut (18), and the magnetic member mounting area (122) is located between the rod ring structure (15) and the second threaded segment (172).

16. The central rod (1) according to any one of claims 11 to 15, wherein an end of the first rod segment (11) remote from the second rod segment (12) is provided with a first threaded segment (171), the first threaded segment (171) being configured to threadedly engage with a top mount (700); and the second rod segment (12) is provided with a rotation limiting structure (8), the rotation limiting structure (8) being configured to limit rotation of the magnetic member (3) relative to the central rod (1).

17. A stator (100), comprising: the central rod (1) according to any one of claims 1 to 16; a cable (2), the cable (2) passing through the central rod cable outlet through-hole (16), a portion of the cable (2) being located within the hollow cavity and another portion being located outside the central rod (1); and a magnetic member (3), the magnetic member (3) being fitted over the magnetic member mounting area (122), the magnetic member (3) comprising a winding lead, the winding lead being adapted to connect to the cable (2).

18. The stator (100) according to claim 17, wherein the stator (100) further comprises a limit nut (18), the central rod (1) has a rod ring structure (15), the limit nut (18) is threadedly engaged with a second threaded segment (172) on the central rod (1), and in the axial direction of the central rod (1), one end of the magnetic member (3) abuts against the rod ring structure (15) and the other end of the magnetic member (3) abuts against the limit nut (18).

19. An electromagnetic damper (1000), comprising:
the stator (100) according to any one of claims 17 or 18;
a mover (600), the mover (600) having a mover cavity, the stator (100) being arranged in the mover cavity, the mover (600) being axially movable relative to the stator (100).

20. The electromagnetic damper (1000) according to claim 19, wherein the mover (600) comprising:
a housing (601);
a mover magnet (602), the mover magnet (602) being installed on the inner wall of the housing (601), the inner side of the mover magnet (602) forming the mover cavity, and the mover magnet (602) being sleeved on the outer periphery of the magnetic member (3);
a guide post (6032), the guide post (6032) being connected to the housing (601), the guide post (6032) being further adapted to be connected to a lower control arm of a vehicle (10000), the hollow cavity comprising a guide cavity (19), and at least part of the guide post (6032) being adapted to extend into the guide cavity (19) and axially movable along the central rod (1).

21. The electromagnetic damper (1000) according to claim 20, wherein the electromagnetic damper (1000) further comprises a first plain bearing (6041) and a second plain bearing (6042), and the housing (601) has a housing bore (6012), and the central rod (1) passes through the housing bore (6012) to partially extend out of the housing (601), and the first plain bearing (6041) is disposed between the housing bore (6012) and the outer peripheral surface of the central rod (1), and the second plain bearing (6042) is disposed between the outer peripheral surface of the guide post (6032) and the wall of the hollow cavity.

22. The electromagnetic damper (1000) according to claim 20 or 21, wherein the mover (600) further comprises a buffer pad (605), the buffer pad (605) is sleeved on the guide post (6032) and located outside the end of the central rod (1).

23. The electromagnetic damper (1000) according to any one of claims 20 to 22, wherein the electromagnetic damper (1000) further comprises a top mount (700), a spring (607) is disposed between the top mount (700) and the housing (601), the top mount (700) comprises:
an upper support member (701) adapted to be connected to the vehicle body, the central rod (1) is adapted to pass through the upper support member (701), and the central rod (1) has an end shoulder (113), and the upper support member (701) abuts against the end shoulder (113);
a fastening nut (702) located on a side of the upper support member (701) facing away from the mover (600), the fastening nut (702) is adapted to be screwed with a first threaded segment (171) on the central rod (1), and the upper support member (701) is clamped between the fastening nut (702) and the end shoulder (113).

24. A vehicle (10000), comprising a suspension system (2000), the suspension system (2000) comprising the electromagnetic damper (1000) according to any one of claims 19 to 23.
